# EUROPEAN PATENT APPLICATION

(11) **EP 1 826 184 A1**
(43) Date of publication of application: **29.08.2007**
(21) Application number: 05806626.7
(22) Date of filing: 17.11.2005
(51) Int. Cl.: C02F 1/70, B01J 23/89, B01J 35/08

(54) **METHOD FOR TREATING WASTE WATER CONTAINING NITRATE NITROGEN**

(30) Priority: 19.11.2004 JP 2004336137
(71) Applicant: JGC Corporation, Tokyo 100-0004 (JP)
(72) Inventor: MIHARA, S., JGC Corp., Res. & Dev. Center, Ibaraki 3131313 (JP); ITO, Hirofumi, c/o JGC Corp., Res. & Dev. Center, Ibaraki 3131313 (JP); HIRANO, Mikio, c/o JGC Corp., Res. & Dev. Center, Ibaraki-gun,Ibaraki 3131313 (JP); KATO, T., c/o JGC Corp.,, Kanagawa 2206001 (JP)
(74) Representative: Poulin, Gérard
(86) International application number: PCT/JP2005/021144
(87) International publication number: WO 2006/054656

(57) **Abstract**

A method for treating waste water containing nitrate ion which comprises supplying raw waste water from a tube (2), formalin from a tube (3) and an aqueous alkaline solution from a tube (4) to a mixing vessel (1), while agitating with an agitator (5), so the resultant mixture has a pH of 7 or higher, transferring the mixture from an outlet pipe (6) to a catalyst bed (9) through a tube (8) by a pump (7), and discharging the treated fluid drained from the catalyst bed (9) to the outside of the system through pipe (11), wherein the catalyst bed (9) is provided within a jacket (10), through which a liquid such as water flows, for the temperature control, and is packed with a support type catalyst comprising spherical type activated carbon and Pd-Cu supported thereon. The type of reactor containing the support type catalyst in the catalyst bed (9) may be a fluidized bed or a fixed bed. The above method can be suitably used for reducing nitrate ion to nitrogen by the use of formalin as a reducing agent at a low treating cost and with a low selectivity of ammonia as a by-product.

## Description

### TECHNICAL FIELD

The present invention relates to a method for treating waste water containing nitrate ion.
Priority is claimed on Japanese Patent Application No. 2004-336137, filed November 19, 2004, the content of which is incorporated herein by reference.

### BACKGROUND ART

Waste water which contains nitrate ion includes waste water derived from sewerage systems, waste water derived from a plating factories or chemical production factories, etc., and waste water derived from nuclear fuel reprocessing plants, and of which is required to be treated to reduce the concentration of nitrate ion contained in the waste water to lower than the effluent standard value in order to satisfy effluent standards.

As a method for treating waste water containing nitrate ion, there is a biological processing methods, which is widely used in the field of sewer processing.
On the other hand, there is also a chemical treatment method. This chemical treatment method is one which uses hydrogen or hydrazine as a reducing agent to reduce nitrate ion by catalytic reaction, thereby removing nitrate ion as nitrogen (see Patent document 1).

In addition, Published Japanese translation No. 2002-521197 of PCT International Publication (Patent document 2) discloses a method for reducing nitrate ions in the presence of a heterogeneous catalyst, using formic acid or formalin. However, this method converts nitrate ions into NOx, and hence it does not achieve complete denitration.

In this connection, if it is possible to reduce nitrate ion into nitrogen using formalin, which is cheap and easy to handle as a reducing agent in such a chemical treatment method, then it is possible to decrease the cost of the entire treatment including the cost of equipment.
However, no chemical treatment method which satisfies this demand has been available until now.

Moreover, as for the method which uses hydrogen or hydrazine as a reducing agent, there has been a problem in that a large amount of ammonia is generated as a by-product in the treatment, and hence another treatment apparatus for removing the ammonia is necessary.
[Patent document 1]
   Japanese Unexamined Patent Application First Publication No. 2003-126872.
[Patent document 2]
   Published Japanese Translation No. 2002-521197 of PCT International Publication.

### DISCLOSURE OF THE INVENTION

### PROBLEMS TO BE SOLVED BY THE INVENTION

Therefore, it is an object of the present invention to provide a method for chemically treating waste water containing nitrate ion, which uses formalin as a reducing agent and is capable of reducing nitrate ion into nitrogen at low cost. It is another object of the present invention to provide a treatment method which is capable of decreasing the amount of ammonium to be generated as a by-product.

### MEANS TO SOLVE THE PROBLEM

In order to solve such a problem, a first aspect of the present invention is a method for treating waste water containing nitrate ion, including adding formaldehyde and/or an oligomer/polymer thereof to waste water which contains nitrate ion, thereby making the pH not less than 7 and allowing the waste water to be in contact with a catalyst.
A second aspect of the present invention is the method for treating waste water containing nitrate ion, as set forth in the first aspect of the present invention, in which the amount of formaldehyde ranges from 0.5 to 3 times the mole equivalent of nitrate ion contained in the waste water.

A third aspect of the present invention is the method for treating waste water containing nitrate ion, as set forth in the first aspect of the present invention, in which the catalyst contains at least palladium and copper.
A fourth aspect of the present invention is the method for treating waste water containing nitrate ion, as set forth in the third aspect of the present invention, in which the palladium and the copper are contained at a weight ratio ranging from 90:10 to 50:50.

A fifth aspect of the present invention is the method for treating waste water containing nitrate ion, as set forth in the first aspect of the present invention, in which the catalyst has a carrier which is a spherical type activated carbon having a particle size ranging from 50 to 1,000 µm.
A sixth aspect of the present invention is the method for treating waste water containing nitrate ion, as set forth in the first aspect of the present invention, in which the treatment is performed at a temperature ranging from 10 to 90°C.

A seventh aspect of the present invention is the method for treating waste water containing nitrate ion, as set forth in the first aspect of the present invention, in which the waste water containing nitrate ion is treated with a continuous circulation type treatment, and the form of said catalyst at that time is a fixed layer or a fluidized bed.

### EFFECT OF THE INVENTION

In accordance with the first aspect of the present invention, a method for treating waste water containing nitrate ion which uses formalin, which is cheap and easy to handle as a reducing agent, and is capable of reducing nitrate ion into nitrogen at low cost and high efficiency, is realized.
In addition, in accordance with any one of the second aspect of the present invention to the seventh aspect of the present invention, it is possible to attain the effect of significantly decreasing the amount of ammonia to be generated as a by-product, thereby down-sizing the equipment for removing the ammonium or making the equipment unnecessary.

### BRIEF DESCRIPTION OF THE DRAWINGS

FIG.1 is a schematic view showing an example of a treatment apparatus used in the present invention.
FIG. 2 is a graph showing the result of Example 8.

### DENOTATION OF REFERENCE NUMERALS

1 ... a mixing vessel,
2, 3, 4, 8, and 11...a pipe,
5 ... an agitator,
7... a pump,
9... a catalyst bed,
10... a jacket

### BEST MODE FOR CARRYING OUT THE INVENTION

The present invention will be explained in detail below.
The method for treating waste water containing nitrate ion of the present invention is a method which includes adding formaldehyde and/or an oligomer/polymer thereof to waste water (referred to as "raw waste water" hereinafter) which contains nitrate ion, and further adding an alkali agent to the mixture so as to make the pH not less than 7, and thereafter allowing the waste water to come in contact with a catalyst.

The waste water referred to here is not particularly limited, and waste water derived from any source may be employed. The concentration of nitrate ion contained in the waste water is also not particularly limited.
As the formaldehyde and/or an oligomer/polymer thereof used in the present invention as a reducing agent, any having at least one of formaldehyde which reduces nitrate ion into nitrogen, and an oligomer/polymer of formaldehyde may be employed, and specifically formalin is preferable because of the ease of availability thereof. Moreover, formalin having a concentration of formaldehyde ranging from 37 to 40 wt% is preferable.

The amount of formaldehyde and/or oligomer/polymer thereof added is set such that in terms of formaldehyde, the molar ratio of formaldehyde/nitrate ion ranges from 1.0 to 3.0, preferably from 1.1 to 2.0. If the molar ratio is less than 1.0, then the reduction will not proceed sufficiently, whereas if the molar ratio is more than 3.0, then the concentration of formic acid and formaldehyde contained in the treatment liquid will increase, and hence it is not preferable.

In the present invention, it is necessary to treat the raw waste water under conditions of not less than pH 7, i.e. alkaline conditions. If the pH is not less than 7, then there is no limitation in particular, however, the pH value preferably ranges from 9 to 13, more preferably from 10 to 13. If the pH value of the raw waste water is less than 7, i.e. acidic, then the formaldehyde will not active as a reducing agent sufficiently, and the reduction of nitrate ion will not be sufficiently performed, and as such is not satisfactory. As an alkalizing agent for making the pH value of the waste water not less than 7, sodium hydroxide, potassium hydroxide, calcium hydroxide, etc. are exemplary, and sodium hydroxide is preferable because of the low cost thereof. The timing of adding the alkalizing agent can be before or after the addition of formaldehyde and/or oligomer/polymer thereof, and the alkalizing agent may be added at the same time.

As the catalyst, one which contains at least one selected from noble metals (Pd, Pt, Ru, Ir and Rn) and non-noble metals (Cu, Sn, Zn, In, Ni, Ag, Fe and Co) is suitable. As the shape of the catalyst, a support type or metallic colloid type one may be used; however, those supported on a support are more suitable because the amount of ammonia generated therefrom will be small. Moreover, as the support, activated carbon is preferable, and in the case of using the catalyst in a fluidized bed or a slurry bed, a spherical type activated carbon is preferable.

In the case of using a support type catalyst, the supporting amount of noble metals preferably ranges from 0.1 to 10 wt%, and more preferably from 0.5 to 5wt%. The supporting amount of non-noble metals preferably ranges from 0.05 to 20 wt%, and more preferably from 0.2 to 10 wt%.
As the noble metal, one among Pd, Pt, Ru, Ir and Rn, Pd is preferable, and as the non-noble metal, Cu, Sn, Zn, In, Ni, Ag, Fe and Co, Cu is preferable, and in particular, a combination of Pd and Cu is preferable. The weight ratio between palladium and Cu ranges preferably from 90:10 to 60:40, and if the ratio of palladium is more than 90%, or if the ratio of palladium is less than 60%, then the activity will decrease.

Moreover, in the case of using the catalyst in a fluidized slurry, as for the spherical type activated carbon as a support, those having a particle sizes ranging from 50 to 1000 µm, preferably from 100 to 800 µm are used. If the particle size is less than 50 µm, then the separation of the catalyst after the treatment will be difficult, whereas if the particle size is more than 1000 µm, then maintenance of the fluidized or slurry will be difficult.
Moreover, the supporting amount of palladium and copper ranges from 0.5 to 10 wt%, and if the carrier amount is less than 0.5 wt%, then the activity will be insufficient, whereas if the carrier amount is more than 10 wt%, then palladium will not be effective.

The temperature of treated fluid during the treatment ranges from 10 to 90°C, preferably from 20 to 60°C, and if the temperature is lower than 10°C, then the reaction will proceed slowly, whereas if the temperature is higher than 90°C, then the generation of steam will be large, thereby deteriorating the controllability of thermal efficiency.
The pressure of the treatment ranges from an atmospheric pressure to 5 kg/cm² ·G, preferably from an atmospheric pressure to 3 kg/cm² ·G.

The treatment may be performed either in a batch-type system or continuous-type system reactor.
In a batch case, raw waste water is put into a reactor, a predetermined amount of formalin is added thereto, and an alkalizing agent is added thereto so as to adjust pH to be not less than 7, and then a catalyst is added thereto. If necessary, the mixture in the reactor is heated, and is agitated for 0.5 to 4 hours so as to perform treatment. When it is confirmed that the concentration of nitrate ion contained in the treated water satisfies the effluent standard, the catalyst is separated and recovered, and then the treated water is discharged outside the system.

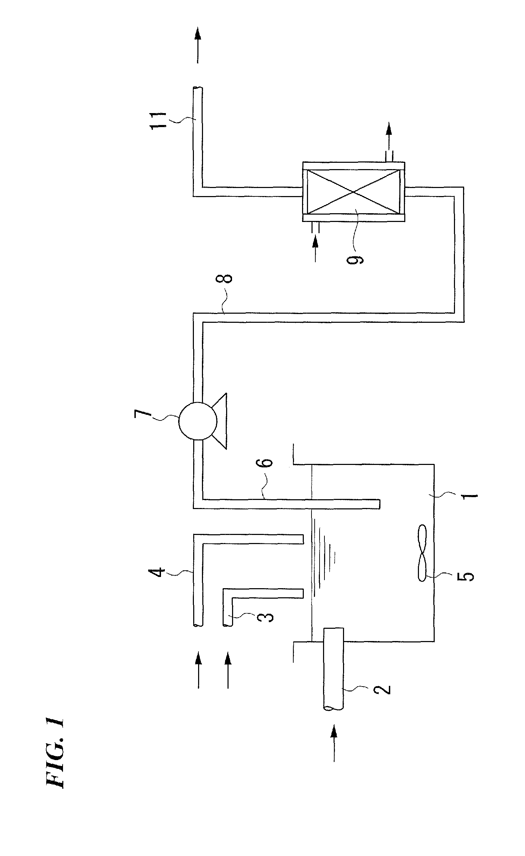

The continuous flow-type manner treatment can be performed, for example, by using an apparatus as shown in FIG. 1.
In FIG. 1, symbol 1 denotes a mixing vessel. To this mixing vessel 1, raw waste water is supplied through a pipe 2, formalin is supplied through a pipe 3, an aqueous alkaline solution such as an aqueous sodium hydroxide solution is supplied through a pipe 4, and the resultant mixture is agitated by an agitator 5, such that the pH value of the treated water is not less than 7.

This treated fluid is extracted through an outlet pipe 6 by a pump 7, and is conveyed to a catalyst bed 9 through a pipe 8.
The catalyst bed 9 is disposed inside a jacket 10, in which temperature control is performed by flowing fluid such as water, oil, etc. into the jacket 10. In the catalyst bed 9, the above support type catalyst is charged. The form of the catalyst charged may be either a fixed bed or a fluidized bed (slurry bed).

The fluid in the jacket 10 is cooled or warmed through a chiller or a heater, which is not illustrated, and kept at a predetermined temperature, thereby allowing the reaction in the catalyst bed 9 to proceed. The flow rate of the treated fluid in the catalyst bed 9 ranges from 0. 1 to 20 1/hr in terms of LHSV. The treated water effluent derived from the catalyst bed 9, having a decreased nitrate ion concentration is discharged through a pipe 11 out of the system.

The reductive activity of formaldehyde is increased by such a waste water treatment of making the pH value of the treated fluid not less than 7, i.e. alkaline, such that the nitrate ions of the raw waste water are reduced by formaldehyde into nitrite ions, whereas formaldehyde is oxidized into formic acid.

NO₃⁻ + HCHO → NO₂⁻ + HCOOH (1)

The generated formic acid further reduces nitrite ions.

2NO₂⁻ + 3HCOOH → N₂ + 3CO₂ + 2H₂O + 2OH⁻ (2)

In addition, formaldehyde simultaneously reduces nitrate ions.

4NO₂⁻ + 3HCHO → 2N₂ + 3CO₂ + H₂O + 4OH⁻ (3)

Nitrate ions are reduced into nitrogen as shown in the following formula (4) by these reactions.

4NO₃⁻ + 5HCHO → 2N₂ + 5CO₂ + 3H₂O + 4OH⁻ (4)

In this reaction, nitrate ions will react with the generated formic acid into ammonia as a side reaction according to the equation (5).

NO₃⁻ + 4HCOOH → NH₃ + 4CO₂ + 2H₂O + OH⁻ (5)

In order to suppress this side reaction as much as possible, it is more effective to make the added amount of formaldehyde range from 0.5 to 3 times the molar equivalent of nitrate ion, to use the catalyst which contains at least palladium and copper such that the weight ratio between palladium and copper ranges from 90:10 to 50:50, having a spherical type activated carbon with a particle size ranging from 50 to 1000 µm as a support type catalyst, to make the treatment temperature range from 10 to 50°C, and to use a method for treating in a continuous flow type reactor.

Thus, in accordance with the treatment method of the present invention, nitrate ion contained in the raw waste water can be favorably reduced into nitrogen, and naturally vaporized from the treated fluid as nitrogen, thereby decreasing the nitrate ion concentration. In addition, the amount of ammonia to be generated can be suppressed by optimizing the treatment conditions. As a matter of course, if the generated amount of ammonia decreases, then it is possible to downsize the equipment for treating it, and as a result, the cost for the treatment can be reduced.

In addition, as the formaldehyde and/or oligomer/polymer thereof to be used as the reducing agent, formalin is preferable, and in such a case, it is available at low cost, thereby decreasing the running cost. Moreover, since the entire treatment is performed in a liquid phase, the process is simple and hence the equipment therefor may be simplified.

Concrete examples will be given below.
As the catalysts used in the following concrete examples, with the exception of the following catalyst C, those prepared by the catalyst preparation method using the metallic colloidal solution of palladium-copper having a metal concentration of 3%, made by Catalysts and Chemicals Industries Corporation, Ltd. were used.

Catalyst preparation method
Catalyst A-0; the percentage of copper is 0 wt%
Catalyst A-10; the percentage of copper is 10 wt%
Catalyst A-20; the percentage of copper is 20 wt%
Catalyst A-25; the percentage of copper is 25 wt%
Catalyst A-30; the percentage of copper is 30 wt%
Catalyst A-40; the percentage of copper is 40 wt%
Catalyst B-25; one which is prepared by making the Catalyst A-25 be supported on a spherical type activated carbon (having an average particle size of 180 µm) such that the metal carrier amount is 3 wt%, and then drying it at 120°C.

Catalyst C; one which is prepared by making a mixture consisting of copper and palladium in an respective 23% and amount of 77 wt% be supported on activated carbon. This is prepared by impregnating an aqueous copper nitrate solution into 5 wt% palladium /activated carbon (made by NIKKI CHEMICAL Co., Ltd.) such that copper/palladium atomic ratio is 0.5, then drying it at 120°C, and thereafter reducing it in a nitrogen stream at 350°C.

### (Example 1)

To 500 ml of an aqueous solution having a nitrate ion concentration of 226 mg-N/1(nitrate ion concentration of 16 mmol/l), 5.0 ml of solution of the catalyst A-25 (metal concentration of 3%) was added, then 1.0 ml of formalin (formaldehyde concentration of 37%) was added thereto (HCHO/NO₃ =1.7 mol/mol), and the resultant mixture was agitated at 60°C under an atmospheric pressure, and then 15 ml of an aqueous sodium hydroxide solution having a concentration of 1 mol/l was added to this solution, thereby adjusting pH to be 12.7.
The concentration of the remaining nitrate ion after one hour of the reaction was 0.8 mmol/l, the conversion rate was 95%, and the remaining ammonia concentration was 3 mmol/l.

### (Example 2)

To 500 ml of an aqueous solution having a nitrate ion concentration of 2260 mg-N/l (nitrate ion concentration of 161 mmol/l), 37.5 ml of a solution of the catalyst A-25 (metal concentration of 3%) was added, then 9.0 ml of formalin (formaldehyde concentration of 37%) was added thereto (HCHO/NO₃ = 1.5 mol/mol), and the resultant mixture was agitated at 60°C under an atmospheric pressure, and then 162 ml of an aqueous sodium hydroxide solution having a concentration of 1 mol/l was added to this solution, thereby adjusting pH to be 11.7.
The concentration of the remaining nitrate ion after one hour of the reaction was 5.2 mmol/l, the conversion rate was 96%, and the remaining ammonia concentration was 3 mmol/l.

### (Example 3)

To 500 ml of an aqueous solution having a nitrate ion concentration of 1130 mg-N/l(nitrate ion concentration of 81 mmol/l 7.5 ml of solution of the catalyst A-25 (metal concentration of 3%) was added, then 4.5 ml of formalin (formaldehyde concentration of 37%) was added thereto (HCHO/NO₃ = 1.5 mol/mol), and the resultant mixture was agitated at 60°C under an atmospheric pressure, and then 81 ml of an aqueous sodium hydroxide solution having a concentration of 1 mol/l was added to this solution, thereby adjusting pH to be 12.8.
The concentration of the remaining nitrate ion after one hour of the reaction was 7 mmol/l, the conversion rate was 92%, and the remaining ammonia concentration was 8 mmol/l.

### (Example 4)

An examination using a nitrate ion solution having an initial concentration of 1.3 mol (nitrate ion concentration, 1.3 mol/l, approximately 80,000ppm) was performed to obtain the following result.
To 500 ml of an aqueous solution having a nitrate ion concentration of 80,600 mg-N/1(1.3 mol/l), 25 ml of solution of the catalyst A-25 (metal concentration of 3%) was added, then 1.4 ml of 25% of an aqueous sodium hydroxide solution was added to this solution to adjust pH of the solution to be 11.5. The resultant mixture was agitated at 60°C under an atmospheric pressure, and then formalin (an aqueous formaldehyde solution having a concentration of 37%) was added to this solution at a rate of 35 ml/h.
The concentration of the remaining nitrate ion after 3.5 hours of the reaction was 0.012 mol/l, the conversion rate was 98.9%, and the remaining ammonia concentration was 0.004 mol/l.

**[Table 1]**

| | |
|---|---|
| Nitrate ion concentration (mol/l) | 1.3 |
| Conversion rate (%) | 99% |
| Remaining ammonia concentration (mol/l) | 0.004 |

In the case of treating a solution of nitrate ion having a high concentration, the remaining ammonia content in the solution may be large, however, in accordance with the present invention, it is possible to suppress the generation of ammonia even in the case in which the concentration of nitrate ion is high, and the conversion rate is also very high.

### (Example 5)

To 500 ml of an aqueous solution having a nitrate ion concentration of 226 mg-N/l (nitrate ion concentration of 16 mmol/l), 5.0 ml of solution of the catalysts A-0, 10, 20, 25, 30, and 40 (metal concentration of 3%) was added, then 1.0 ml of formalin (formaldehyde concentration of 37%) was added thereto, and the resultant mixture was agitated at 60°C under an atmospheric pressure, and then 15 ml of an aqueous sodium hydroxide solution having a concentration of 1 mol/l was added to this solution, thereby adjusting pH to be 13.0.
The conversion rate of nitrate ion and the remaining ammonia concentration after 2 hours of the reaction were measured corresponding to the percentage of palladium contained in the catalyst. The result is as follows.

**[Table 2]**

| Percentage of Pd (%) | Conversion rate of nitrate ion (%) | Remaining NH₃ concentration (mmol/l) |
|---|---|---|
| 0 | 0 | 0 |
| 90 | 5 | 0.5 |
| 80 | 55 | 2 |
| 75 | 100 | 4 |
| 70 | 100 | 5 |
| 60 | 75 | 3 |
| 100 | 0 | 0 |

From the result in the above, it is demonstrated that the weight ratio of palladium/copper ranges preferably from 90/10 to 60/40, and more preferably from 80/20 to 60/40.

### (Example 6)

To 500 ml of an aqueous solution having a nitrate ion concentration of 2260 mg-N/l(nitrate ion concentration of 161 mmol/l), 9.0 ml of solution of the catalyst A-25 (metal concentration of 3%) was added, then 1.0 ml of formalin (formaldehyde concentration of 37%) was added thereto, and the resultant mixture was agitated at 60°C under an atmospheric pressure, and then 75 ml of an aqueous sodium hydroxide solution having a concentration of 1 mol/l was added to this solution, thereby adjusting pH to be 12.0.
The concentration of the remaining nitrate ion after one hour of the reaction was 5.0 mmol/l, the conversion rate was 97%, and the remaining ammonia concentration was 4 mmol/l.

### (Example 7)

A continuous flow type apparatus system shown in FIG. 1 was used.
To 200 ml of an aqueous solution having a nitrate ion concentration of 226 mg-N/1 (nitrate ion concentration of 16 mmol/l 0.4 ml of formalin (formaldehyde concentration of 37%) was added thereto, and then 6 ml of an aqueous sodium hydroxide solution having a concentration of 1 mol/l was added to this solution, thereby adjusting pH to be 12.4. The resultant mixture was fed into the catalyst bed at a LHSV = 5 l/hour using a pump. The reactor (catalyst bed) was put into a hot water bath to keep the temperature at 60°C. The catalyst B-25 was loaded in the reactor.
The concentration of the remaining sodium nitrate after one hour of the reaction was 2.0 mmol/l, the conversion rate was 90%, and the remaining ammonia concentration was not more than 0.1 mmol/l.

### (Example 8)

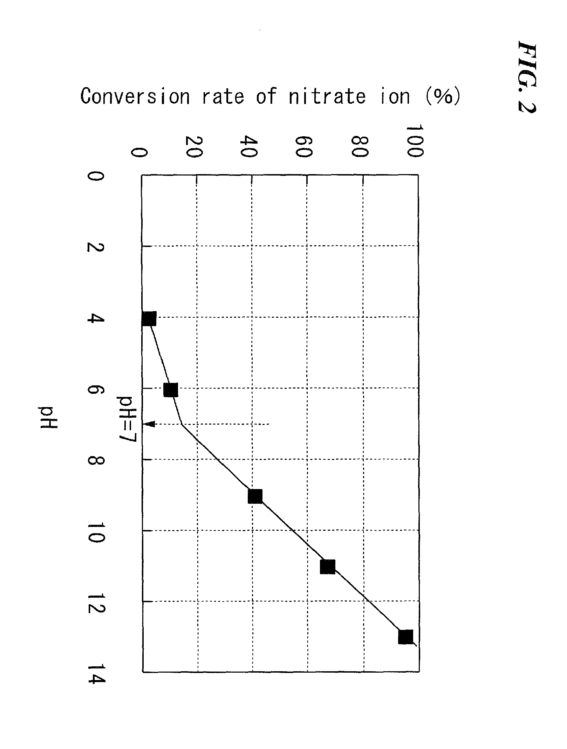

Sulfuric acid or an aqueous sodium hydroxide solution was added to the treated water, thereby adjusting the initial pH to range from 4 to 13, and as a result, the following result was obtained.
A treatment was performed by the same way as in Example 1, with the exception of adjusting pH and using 50 ml of A-30 colloid solution as the catalyst. The conversion rate of nitrate ion and the remaining ammonia concentration after one hour of the reaction are shown below and in FIG.2.

**[Table 3]**

| pH | Conversion rate of nitrate ion (%) | Remaining NH₃ concentration (mmol/l) |
|---|---|---|
| 4 | 3 | 0.1 |
| 6 | 10 | 0.2 |
| 9 | 41 | 0.3 |
| 11 | 67 | 0.9 |
| 13 | 95 | 5.0 |

From the above result, in acidic side of pH =4 and pH =6 the conversion rate of nitrate ion is low, i.e. not more than 10%, and the reduction of nitrate ion by formaldehyde is slow. On the other hand, the reactivity gradually increases as the pH is elevated, and the conversion rate is more than 40% at the alkaline side of pH = 9, 11, 13, which demonstrates that the reduction of nitrate ion is accelerated.
In addition, as shown in FIG. 2 and below, at the pH = 10, the conversion rate of nitrate ion is more than 50%, and further at the pH = 12, the conversion rate of nitrate ion reaches 80%, which demonstrates that the reductive ability of formaldehyde at a strong alkaline side is further accelerated.

### (Example 9)

An examination was performed by the same way as in Example 8, with the exception of adjusting HCHO/NO₃ (molar ratio) to be 2.5 and 6.0, pH to be 13.0 using an aqueous sodium hydroxide solution, and the temperature of the mixture to be 30°C. The conversion rate of nitrate ion and the remaining ammonia concentration after one hour from the start of the reaction are shown below.

| | | |
|---|---|---|
| HCHO/NO₃ (molar ratio) | 2.5 | 6.0 |
| Nitrate ion conversion rate (%) | 100 | 100 |
| Remaining NH₃ concentration (mmol/l) | 4 | 5 |

### (Example 10)

An examination was performed by the same way as in Example 8, with the exception of adjusting the reaction temperature to be 80°C, and the pH to be 12.0 using an aqueous sodium hydroxide solution. The conversion rate of nitrate ion and the remaining ammonia concentration after one hour from the reaction are shown below.

| | |
|---|---|
| Temperature (°C) | 80 |
| Nitrate ion conversion rate (%) | 100 |
| Remaining NH₃ concentration (mmol/l) | 4 |

### (Comparative Example 1)

An examination was performed by the same way as in Example 8, with the exception of using formic acid as a reducing agent instead of formalin and adjusting the pH to be 12.0 using an aqueous sodium hydroxide solution. The added amount of formic acid was 1.0 ml. The conversion rate of nitrate ion after one hour from the start of the reaction was 100%, however, the product was ammonia at a selectivity of approximately 100%, which was quite different from the case of using formaldehyde.

### INDUSTRIAL APPLICABILITY

The present invention is applicable to a method for treating waste water including nitrate ion where by using formaldehyde as a reducing agent, nitrate ion is selectively converted to nitrogen depressing formation of ammonia.

## Claims

1. A method for treating waste water containing nitrate ion, comprising adding formaldehyde and/or an oligomer/polymer thereof to waste water which contains nitrate ion, thereby making the pH not less than 7 and allowing the waste water to be in contact with a catalyst.

2. The method for treating waste water containing nitrate ion, as set forth in Claim 1, wherein the amount of said formaldehyde ranges from 0.5 to 3 times mole equivalent of nitrate ion contained in said waste water.

3. The method for treating waste water containing nitrate ion, as set forth in Claim 1, wherein said catalyst contains at least palladium and copper.

4. The method for treating waste water containing nitrate ion, as set forth in Claim 3, wherein said palladium and said copper are contained at a weight ratio ranging from 90:10 to 50:50.

5. The method for treating waste water containing nitrate ion, as set forth in Claim 1, wherein said catalyst has a support which is a spherical type activated carbon having a particle size ranging from 50 to 1000 µm.

6. The method for treating waste water containing nitrate ion, as set forth in Claim 1, wherein said treatment is performed at a temperature ranging from 10 to 90°C.

7. The method for treating waste water containing nitrate ion, as set forth in Claim 1, wherein said waste water containing nitrate ion is treated with a continuous flow type system, and the type of reactor containing said catalyst at that time is a fixed bed or a fluidized bed.
